# EUROPEAN PATENT APPLICATION

(11) **EP 4 517 663 A1**
(43) Date of publication of application: **05.03.2025**
(21) Application number: 24196637.3
(22) Date of filing: 27.08.2024
(51) Int. Cl.: G06T 7/55, G06T 7/73, B60R 1/27, H04N 23/698

(54) **METHOD AND DEVICE FOR GENERATING A THREE-DIMENSIONAL RECONSTRUCTION OF AN ENVIRONMENT AROUND A VEHICLE**

(30) Priority: 29.08.2023 GB 202313047
(71) Applicant: Continental Autonomous Mobility Germany GmbH, 85057 Ingolstadt (DE)
(72) Inventor: Kannan, Srividhya, 560100 Bangalore (IN); Padiri, Bhanu Prakash, 560100 Bangalore (IN)
(74) Representative: Continental Corporation

(57) **Abstract**

A computer implemented method for generating a three-dimensional reconstruction of an environment around a vehicle may be provided. The method may include capturing multiple wide-angle images around the vehicle using multiple fisheye lens cameras mounted on the vehicle, creating a surround view image around the vehicle from the multiple captured images by generating one or more feature maps, and calculating a pose and depth estimate from the generated feature maps using at least one convolutional neural network. The method may also include detecting one or more objects in the multiple captured images, mapping one or more objects detected around the model of the vehicle, to the created surround view image using the calculated pose and depth estimate; and constructing the three-dimensional reconstruction of the environment, using the surround view image and the mapped objects.

## Description

### TECHNICAL FIELD

Various combination of the features of the present disclosure relate to method and device for generating a three-dimensional reconstruction of an environment around a vehicle. More specifically it relates to detecting the scene around the vehicle.

### BACKGROUND

Surround view system is an important feature in vehicles which may help in many scenarios. The ultrasonic sensors used in surround view systems help driver to decide on possible obstruction but fail many times due to poor sensing. The surround view systems are also not very sensitive in areas with poor light and in parking lots due to poor lighting and congested spaces. The existing deep learning models in the surround view systems trained for vehicle light recognition, also fail at night to generate reliable Time-To-Collision (TTC) values on pitch dark images.

In view of the above, there is a need for an improved method for detecting the environment around a vehicle for a surround view system.

### SUMMARY

In order to satisfy the need described above, there is provided a method for generating a three-dimensional reconstruction of an environment around a vehicle. The method may include capturing multiple wide-angle images around the vehicle, using multiple fisheye lens cameras mounted on the vehicle. The method may further include creating a surround view image around the vehicle from the multiple captured images by generating one or more feature maps, and calculating a pose and depth estimate from the generated feature maps using at least one neural network. The method may also include detecting one or more objects in the multiple captured images. It further includes mapping one or more objects detected around the model of the vehicle, to the created surround view image using the calculated pose and depth estimate, and constructing the three-dimensional reconstruction of the environment, using the surround view image and the mapped objects. This may enable creating a 'bowl shaped' image of the environment around the vehicle, and the objects around the vehicle are appropriately mapped to the created image. The neural network may be a combination of feature extraction network and a three dimensional convolution network.

In an alternative combination of features, which may be combined with alternative combinations described above, capturing the multiple wide-angle images comprises capturing at least two wide-angle images having overlapping field of view, from the multiple fisheye lens cameras. The method may include calculating a disparity between the captured at least two or more wide angle images, and detecting coordinates of an object on the at least two or more captured wide angle images, and a dimension of the object on the image using the calculated disparity. This may enable clear field of view, around the vehicle. It enables finding how far is an object from the vehicle, and helps to safely maneuver the vehicle safely for even smaller parking lots, using the placing of the objects. The beforementioned "calculated disparity" may for example be calculated using a disparity map. The images may be converted to grayscale before computing a disparity map. A disparity function may be used to compute the disparity by comparing the differences of each block of pixels in the grayscale images. In an alternative combination of features, every pixel in one image is matched with its corresponding pixel in another image. The distance or difference for each pair of matching pixels may be calculated. Finally, the disparity map may be obtained by representing such distance values as an intensity image. In another alternative combination of features, another appropriate process may be used to calculate the disparity, for instance please refer to patent publication no US20210142095A1, more specifically paragraphs [0035] to [0071].

In an alternative combination of features, which may be combined with alternative combinations described above, capturing multiple wide-angle images further comprises undistorting the captured images and correcting geometric alignment in the undistorted images. The method further comprises generating a point cloud by proving the calculated difference between the captured left and right image as input to the neural network, and performing simultaneous localization of the objects on the left and the right image using the generated point cloud and estimating motion of the object. This may enable using corrected and tuned wide angle images for creating the environment around the car, so that the object detection and other processing on the images produces precise results without error. Also the method helps estimate the motion of the objects. This will help the driver maneuver the vehicle in a safe manner.

In an alternative combination of features, which may be combined with alternative combinations described above, the method steps are performed more than once and generating the feature map and calculating the pose and depth estimate comprises processing each of the captured wide-angle images by a feature extraction network, and calculating an incremental pose update for each of the captured wide-angle image. Feature maps at different resolution maybe generated for the feature extraction, and then concatenated and flattened and maybe passed to a fully connected layer in the neural network. The extracted features maybe transmitted to a three dimensional convolution network for depth and pose estimation. This is done for incremental pose update between every adjacent pair. This may enable avoiding the vehicle bumping into moving objects and increase security of pedestrians around the vehicle. It also helps tracking the direction of the objects.

A feature extraction and feature detection process may include activating a YOLOv5 model trained with training data to form a model, wherein the model serves as a basis for object detection in the received camera data. Preferably, a YOLOv5 model is formed for object detection with a MobileNet type backbone network.

The YOLO family of models may consist of three main architectural blocks i) Backbone, ii) Neck and iii) Head.

YOLOv5 Backbone: It employs CSPDarknet as the backbone for feature extraction from images consisting of cross-stage partial networks.

YOLOv5 Neck: It uses PANet to generate a feature pyramids network to perform aggregation on the features and pass it to Head for prediction.

YOLOv5 Head: Layers that generate predictions from the anchor boxes for object detection.

A convolutional neural network (CNN) is a multi-layered feed-forward neural network, made by stacking many hidden layers on top of each other in sequence. The sequential design may allow convolutional neural networks to learn hierarchical features. The hidden layers are typically convolutional layers followed by activation layers, some of them followed by pooling layers. The CNN may be configured to identify pattens in data. The convolutional layer may include convolutional kernels, that are used to look for patterns across the input data. The convolutional kernel may return a large positive value for a portion of the input data that matches the kernel's pattern or may return a smaller value for another portion of the input data that does not match the kernel's pattern.

The CNN may be able to extract informative features from the training data without the need for manual processing of the training data. The CNN may produce accurate results where large unstructured data is involved, such as image classification, speech recognition and natural language processing. Also, CNN is computationally efficient, as it is able to assemble patterns of increasing complexity using the relatively small kernels in each hidden layer.

Trajectron++ is a machine learning algorithm using conditional variational autoencoders, long short-term memory networks and convolutional neural networks. It is used for a prediction of future dynamics of several entities in scene. The algorithm may be based on the Trajectron algorithm described by B. Ivanovic et al., in "Modeling multimodal dynamic spatiotemporal graphs", published in CoRR, abs/1810.05993, 2018, DOI http://arxiv.org/abs/1810.05993 and described in detail by T. Salzmann et al. in "Trajectron++: Multi-agent generative trajectory forecasting with heterogeneous data for control", published in CoRR, abs/2001.00735, 2020, DOI https://arxiv.org/abs/2001.03093. It can e. g. be used for predicting a trajectory of an at least partially autonomous vehicle.

An entity's environment is presented as a directed, spatiotemporal graph. Nodes represent surrounding entities and are connected though spatial edges connecting different entities influencing each other within the same timestep and therefore covering interactions between different entities, and temporal edges connecting the same node through time thus representing past dynamics. An interaction between two different entities takes place if its distance is smaller than an attention radius which can be chosen independently and individually for each entity class of two mutually influencing entities. An implementation of the Trajectron++ algorithm can be found on: https://github.com/StanfordASL/Trajectron-plus-plus. For training, e. g. the ETH and UCY Pedestrian datasets can be used.

MobileNet is an architecture model of a convolutional neural network for object detection that was optimized primarily for speed. The main building blocks of MobileNet are depthwise separable convolutions which factorize or separate the standard convolution filter into two distinct operations: (i) a first operation where separate convolution kernels, also known as depthwise with a convolution, are applied to each input channel ("depthwise convolution"); and (ii) a second operation where pointwise (1 x 1) convolution is used to combine the information of the first operation ("pointwise convolution"). On the other hand, standard convolution filters perform the channel-wise and spatial-wise computation in a single step. The separation or factorization of the standard convolution into two distinct operations have less parameter and computational costs than a standard convolution due to fewer mult-adds (multiplication and addition operations).

In some embodiments, the CNN as described above may comprise a first standard convolution layer, followed by a plurality of depthwise and pointwise convolution layers, an average pooling layer, a fully connected layer, and a softmax classifier. Each layer in the CNN may be followed by a batch normalization (BN) and Rectified Linear Activation Function (ReLU) nonlinearity with the exception of the final fully connected layer which has no nonlinearity and feeds into a Softmax layer for classification.

In an alternative combination of features, which may be combined with alternative combinations described above, a model of the vehicle is placed at the center of the created surround view image. This enables the driver to interpret the distance of the objects with respect to the position of the car, and also helps the driver to detect the maneuvering of the car.

In an alternative combination of features, which may be combined with alternative combinations described above, the method is continuously performed until the vehicle is turned off. This enables the driver to continuously detect the environment and maneuver the car.

In an alternative combination of features, which may be combined with alternative combinations described above, there is provided a device for generating a three-dimensional reconstruction of the environment around a vehicle comprising a memory, a memory, multiple fisheye lens cameras mounted over the vehicle, one or more image processors coupled to the multiple fish eye lens cameras, one or more graphical processing unit coupled to the multiple fish eye lens cameras, and one or more processing core for performing the method as explained above.

In an alternative combination of features, which may be combined with alternative combinations described above, there is provided a vehicle comprising the device described above.

In an alternative combination of features, which may be combined with alternative combinations described above, there is provided a non-transitory computer-readable storage medium comprising instructions, which when executed by a processor, performs the method as described above.

### BRIEF DESCRIPTION OF DRAWINGS

In the drawings, like reference characters generally refer to the same parts throughout the different views. The drawings are not necessarily to scale, emphasis instead generally being placed upon illustrating the principles of the invention. In the following description, various embodiments are described with reference to the following drawings, in which:
Fig 1 relates to an embodiment of a general purpose computing machine for implementing the present disclosure;
Fig 2 relates to a flowchart of an embodiment of the process as disclosed in the present disclosure;
Fig 3 relates to a flow diagram of an embodiment of the process as disclosed in the present disclosure;
Fig 4 relates to an example of a reconstruction of the environment around the vehicle; and
Fig 5 relates to an example of the system for implementing the process as disclosed.

### DESCRIPTION

The combination of features described below in context of the devices are analogously valid for the respective methods, and vice versa. Furthermore, it will be understood that the combinations of features described below may be considered together, for example, a part of one combination may be joined with a part of another combination.

It will be understood that any property described herein for a specific device may also hold for any device described herein. It will be understood that any property described herein for a specific method may also hold for any method described herein. Furthermore, it will be understood that for any device or method described herein, not necessarily all the components or steps described must be enclosed in the device or method, but only some (but not all) components or steps may be enclosed.

In an alternative combination of features, which may be combined with alternative combinations described above, the present disclosure relates to representing the environment around a vehicle which may help with monitoring, warning, braking, steering and other such tasks. This may help in dark and in poor lighting and congested spaces where visual cues maybe limited. The vehicle maybe a car, or any multi-axle vehicle with more than 2 axles, or a vehicle with trailers.

Throughout this document the word "pose estimation" may have the meaning of predicting and tracking the location of an object in an image. It may predict the transformation of an object from a user-defined reference pose, given an image. The image data from which the pose of an object is determined may be either a single image, a stereo image pair, or an image sequence.

Throughout this document, the word "depth" may have the meaning of the perpendicular distance between an object and the plane of a scene camera. Each pixel in an image has a depth value and can indicate the distance of the pixel from the camera plane.

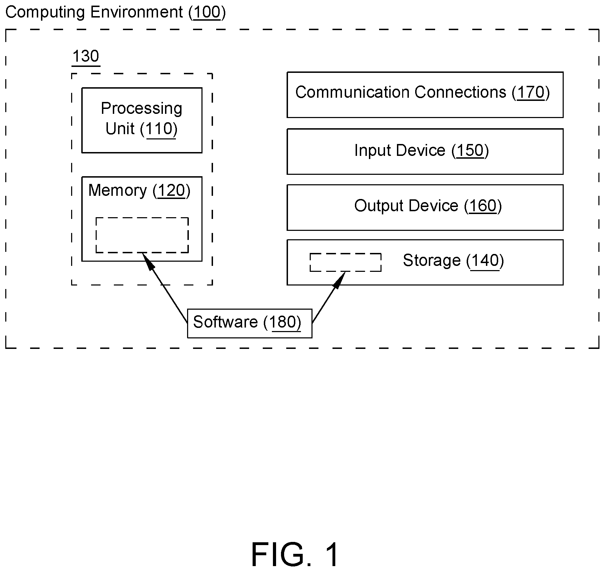

FIG. 1 illustrates a generalized example of a suitable computing environment 100 which maybe used during implementation of the present disclosure. The computing environment 100 is not intended to suggest any limitation as to scope of use or functionality, as the technologies may be implemented in diverse general-purpose or special-purpose computing environments.

With reference to FIG. 1, the computing environment 100 includes at least one processing unit 110 coupled to memory 120. In FIG. 1, this basic configuration 130 is included within a dashed line. The processing unit 110 executes computer-executable instructions. In a multi-processing system, multiple processing units execute computer-executable instructions to increase processing power. The memory 120 may be non-transitory memory, such as volatile memory (e.g., registers, cache, RAM), non-volatile memory (e.g., ROM, EEPROM, flash memory, etc.), or some combination of the two. The memory 120 can store software 180 implementing any of the technologies described herein.

A computing environment may have additional features. For example, the computing environment 100 includes storage 140, one or more input devices 150, one or more output devices 160, and one or more communication connections 170. An interconnection mechanism (not shown) such as a bus, controller, or network interconnects the components of the computing environment 100. Typically, operating system software (not shown) provides an operating environment for other software executing in the computing environment 100, and coordinates activities of the components of the computing environment 100.

The storage 140 may be removable or non-removable, and includes magnetic disks, magnetic tapes or any other non-transitory computer-readable media which can be used to store information and which can be accessed within the computing environment 100. The storage 140 can store software 180 containing instructions for any of the technologies described herein.

The input device(s) 150 may be a touch input device such as a keyboard, touchscreen, a voice input device, a scanning device, or another device that provides input to the computing environment 100. The output device(s) 160 may be a display, speaker, or another device that provides output from the computing environment 100. Some input/output devices, such as a touchscreen, may include both input and output functionality.

The communication connection(s) 170 enable communication over a communication mechanism to another computing entity. The communication mechanism conveys information such as computer-executable instructions, audio/video or other information, or other data. By way of example, and not limitation, communication mechanisms include wired or wireless techniques implemented with an electrical, optical, RF, infrared, acoustic, or other carrier.

The techniques herein can be described in the general context of computer-executable instructions, such as those included in program modules, being executed in a computing environment on a target real or virtual processor. Generally, program modules include routines, programs, libraries, objects, classes, components, data structures, etc., that perform particular tasks or implement particular abstract data types. The functionality of the program modules may be combined or split between program modules as desired in various combinations. Computer-executable instructions for program modules may be executed within a local or distributed computing environment.

Any of the storing actions described herein can be implemented by storing in one or more computer-readable media (e.g., non-transitory computer-readable storage media or other tangible media). Any of the things described as stored can be stored in one or more computer-readable media (e.g., computer-readable storage media or other tangible media).

Any of the methods described herein can be implemented by computer-executable instructions in (e.g., encoded on) one or more computer-readable media (e.g., non-transitory computer-readable storage media or other tangible media). Such instructions can cause a computer to perform the method. The technologies described herein can be implemented in a variety of programming languages.

Any of the methods described herein can be implemented by computer-executable instructions stored in one or more non-transitory computer-readable storage devices (e.g., memory, CD-ROM, CD-RW, DVD, or the like). Such instructions can cause a computer to perform the method.

In the present combination of features which may be combined with alternative combinations, the computing environment (100) may be implemented within a vehicle, which may be appropriately configured with memory, processors, input - device and other components as explained above including software instructions. In another combination of features, the computing environment may be implemented on a system on chip (SoC) or other embedded systems.

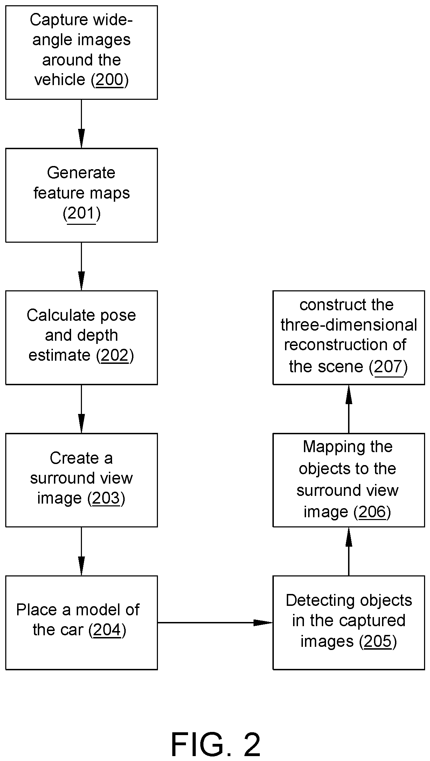

In an alternative combination of features, which may be combined with alternative combinations described above, the process of the present patent application will be explained along with the description of FIG 2. In one combination of features, multiple wide angle images of the environment around the vehicle maybe captured (200). This maybe done by one or more fish-eye lens camera, which may be mounted on the vehicle. In an example, a surround-view system may use four to six wide-angle-view cameras or fish-eye lens cameras mounted on the front, rear and sides of a vehicle. This may enable detecting and identifying the environment around the vehicle using wide angle images captured by the fish-eye lens cameras. Using wide angle images may help capturing images which have bigger field of view which may also overlap with the adjacent images and help detect and localize objects as will be explained in below paras.

In one combination of features, which may be combined with alternative combinations described above, the images captured by the fish-eye lens camera may be distorted or not aligned or may need any other correction. The images may be initially processed for undistorting them. This can be done by correcting the geometric alignment. The images may further be corrected for balancing and color correction. The distortion coefficient maybe used for undistorting the images. This may ensure that further analysis and processing as described in below paras are more accurate and not prone to errors.

In one combination of features, at least two adjacent images maybe selected which have overlapping field of view. The selected images maybe overlapped for identifying the disparity between the images. The disparity may be pixel difference or the difference because of motion. The identified disparity may help calculate the alignment difference between the for detecting the actual location and motion of an object which present in both the images. This may also help calculate the size, dimension and coordinates of the object. This may enable the vehicle to detect how far and how big is an object, which is present in the environment of the vehicle. And based on this calculation the objects may be correctly mapped on a surround view image around the vehicle.

In one combination of features, which may be combined with alternative combinations described above, one or more feature maps may be generated using the multiple wide angle images (201). The feature maps may enable calculating pose and depth estimation (202). This may be done using one or more convolutional neural network. The convolutional neural network may identify key points in the images for the estimates. A depth estimation neural network may detect objects in an image, determine size of the object in the image, infer a real size of the object by recognizing the object type, and estimate a depth of the object based on the size of the object in the image and the inferred real size. In one combination of features, the disparity identified between adjacent images may be provided as input to the neural network. This may enable by a point cloud. The point is a set of data points helpful for identifying motion of the objects that were detected around the vehicle. A simultaneous localization of the objects on the adjacent images maybe performed using the point cloud to get the movement of the objects along with estimating it's movements.

These may be used to generate a surround view image around the car (203). In one combination of features, apart from the fish-eye lens camera data, any other sensor data can be fused to reduce invalid depth estimations in occluded regions.

In one combination of features, which may be combined with alternative combinations described above, a model of the vehicle can be placed at the center of the surround view image (204). In an example, an animated model of the vehicle may be used. This may give the driver a bird's eye view of the environment. Other appropriate overlays may also be added to the image that show the vehicle's position relative to objects that the fish-eye lens cameras see.

In one combination of features, which may be combined with alternative combinations described above, all possible objects around the vehicle may be detected (205). This may be done using any existing or appropriate detection process. The detected objects may be mapped to the surround view image (206). The pose and depth estimate and the calculated size, dimension and coordinates of objects can be used for a precisely mapping the objects on the surround view image so that the driver can interpret the surrounding correctly. This may enable the driver to maneuver the vehicle safely while parking, or detecting in blind spot, and while in occluded or dark areas. This step also ensures that the objects like pillars, pedestrian are not cut off if they are in blind spot or in the corner. It is provides assistance while parking trailers or multi-axle vehicle with more than 2 axles.

In one combination of features, which may be combined with alternative combinations described above, feature maps maybe generated at different levels and then concatenated and flattened for depth and pose estimation. The pose and depth updates maybe applied to the current depth and pose estimates through retraction on the spectral orthogonal group transformation along with translation. This is done for incremental pose update between every image pair.

In congested or limited spaces, the vehicle may have to be traversed back and forth multiple times. The above-described steps may be needed as long as the vehicle is moving, so that the drivers get the assistance whenever needed along with, while parking the vehicle. This is particularly possible with a neural network as 'MobileNet' as described above since this neural network can quickly enough classify the environment around the vehicle.

In one combination of features, which may be combined with alternative combinations described above, a three-dimensional reconstruction of the environment maybe generated using the surround view images with the objects mapped to it. As described above the location of the object, its motion and estimated motion is also identified. In combination this enables generating a three-dimensional image of the environment of the vehicle, which may appear like a bowl shaped image surrounding the vehicle.

In one combination of features, the process as defined above maybe continuously performed until the vehicle is turned off. In an alternative combination of features, the process maybe continuously performed until the driving control unit is turned off.

In one combination of features, which may be combined with alternative combinations described above, a system-on-chip (SoC) maybe used for implementing the process as described. The SoC may require capacity for multiple camera inputs, an image signal processor and hardware acceleration for image adjustment and tuning, a graphics processing unit for creating the vehicle model, and image overlays and processing cores for algorithmic analysis of the images.

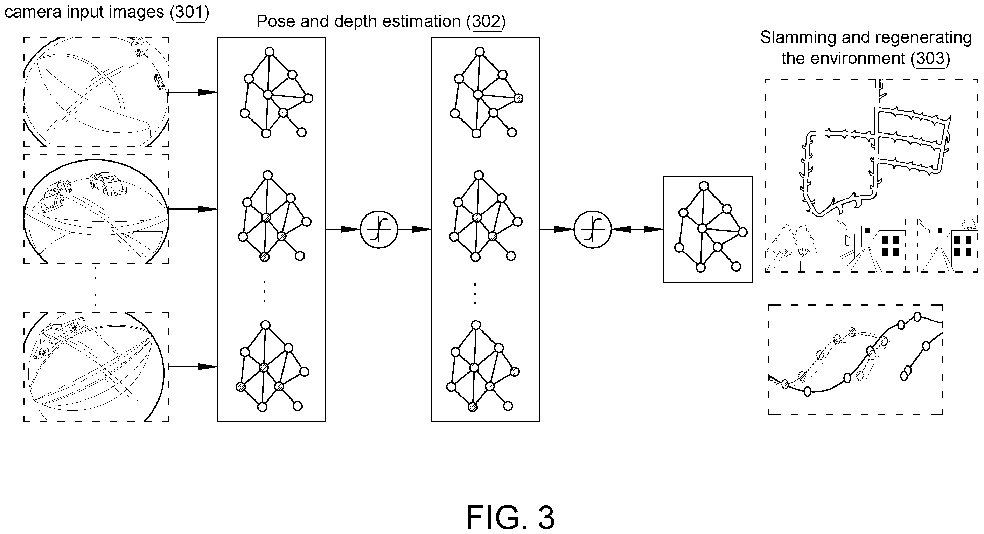

Fig 3 relates to an example of one combination of features of the process described above. In one combination of features, which may be combined with alternative combinations described above, the set of wide angle images captured by a fish eye lens is shown (301). The images are undistorted and processed as explained above. The pose and depth estimation using the captured images (301) is performed and feature maps are generated (302).

Using the overlapping images, the disparity maybe calculated, and the pose and depth estimation maybe used to detect objects, and estimate its motion. Simultaneous localization may be performed to detect and calculate further details such as coordinate, size and movement of the object (303).

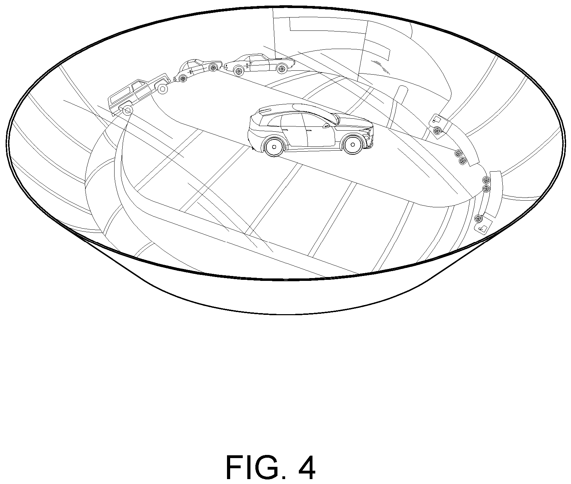

Fig 4 shows an example of a three dimensional reconstruction of an environment around a vehicle. This three dimensional image shows the environment around the vehicle, that may be created by the surround view images as explained along with the description of Fig 2. The objects detected around the vehicle have been mapped to the image. As the vehicle moves in the required direction the environment around it changes, the objects also change and may move. These movements maybe detected as explained above and the appropriate surround view image is continuously generated as the three dimensional reconstruction, for the driver to safely move the vehicle around. Providing this three dimensional reconstruction may enable the driver to maneuver the vehicle in dark areas, occluded areas, parking zones, and may also enable the driver to detect objects in the blind spot. The process as described above may provide clear information of the distance and depth of the surrounding. It may enable generate dense depth maps to give clear field of view of the targets and objects, also when the environment is very dark with no lights. A dense depth map may have less erroneous pixels, and hence correct depth of every pixel in the image can be identified.

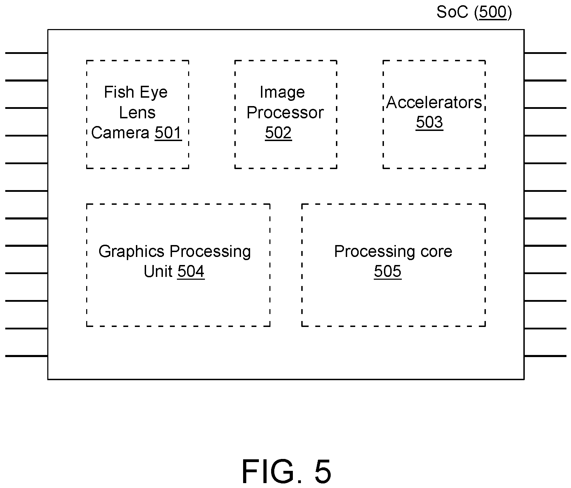

Fig 5 describes an example of a system for implementing the process as described above. An alternative combination of features, which may be combined with alternative combinations disclosed may include a system on chip (SoC 500). The system may include an integrated circuit that combines many elements of the functionalities and components for implementing the features disclosed, into a single chip.

In one combination of features, one or more fish-eye lens camera (501) may be indirectly integrated on the SoC. As explained along with the description of Fig 2, the fish eye lens camera may help capture wide angle images of the environment around the vehicle. The fish eye lens cameras may be mounted on the vehicle, and may help capture images with over lapping field of view.

In one combination of features, the SoC may have one or more image processors (502) integrated to it, directly or indirectly. The images captured by the fish eye lens camera may be processed for the required changes as explained in the process above using the image processors. The image processors may be appropriately configured to produce the processed images as needed. In one combination of features the image processors may be coupled with accelerators for other required tuning and processing of the images.

In one combination of features, the SoC may have one or more graphical processing unit (504) appropriately configured for creating model of the vehicle and objects which are mapped to the surround view images as explained earlier.

In one combination of features, the SoC may have one or more processing cores configured for the implementing the analysis and creating the three dimensional image around the vehicle as explained in the earlier paragraphs.

While embodiments of the invention have been particularly shown and described with reference to specific embodiments, it should be understood by those skilled in the art that various changes in form and detail may be made therein without departing from the spirit and scope of the invention as defined by the appended claims. The scope of the invention is thus indicated by the appended claims and all changes which come within the meaning and range of equivalency of the claims are therefore intended to be embraced. It will be appreciated that common numerals, used in the relevant drawings, refer to components that serve a similar or the same purpose.

It will be appreciated to a person skilled in the art that the terminology used herein is for the purpose of describing various embodiments only and is not intended to be limiting of the present invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

It is understood that the specific order or hierarchy of blocks in the processes / flowcharts disclosed is an illustration of exemplary approaches. Based upon design preferences, it is understood that the specific order or hierarchy of blocks in the processes / flowcharts may be rearranged. Further, some blocks may be combined or omitted. The accompanying method claims present elements of the various blocks in a sample order, and are not meant to be limited to the specific order or hierarchy presented.

The previous description is provided to enable any person skilled in the art to practice the various aspects described herein. Various modifications to these aspects will be readily apparent to those skilled in the art, and the generic principles defined herein may be applied to other aspects. Thus, the claims are not intended to be limited to the aspects shown herein, but is to be accorded the full scope consistent with the language claims, wherein reference to an element in the singular is not intended to mean "one and only one" unless specifically so stated, but rather "one or more." The word "exemplary" is used herein to mean "serving as an example, instance, or illustration." Any aspect described herein as "exemplary" is not necessarily to be construed as preferred or advantageous over other aspects. Unless specifically stated otherwise, the term "some" refers to one or more. Combinations such as "at least one of A, B, or C," "one or more of A, B, or C," "at least one of A, B, and C," "one or more of A, B, and C," and "A, B, C, or any combination thereof" include any combination of A, B, and/or C, and may include multiples of A, multiples of B, or multiples of C. Specifically, combinations such as "at least one of A, B, or C," "one or more of A, B, or C," "at least one of A, B, and C," "one or more of A, B, and C," and "A, B, C, or any combination thereof" may be A only, B only, C only, A and B, A and C, B and C, or A and B and C, where any such combinations may contain one or more member or members of A, B, or C. All structural and functional equivalents to the elements of the various aspects described throughout this disclosure that are known or later come to be known to those of ordinary skill in the art are expressly incorporated herein by reference and are intended to be encompassed by the claims.

## Claims

1. A method for generating a three-dimensional reconstruction of an environment around a vehicle comprising,
capturing multiple wide-angle images around the vehicle, using multiple fisheye lens cameras mounted on the vehicle;
creating a surround view image around the vehicle from the multiple captured images by generating one or more feature maps; and
calculating a pose and depth estimate from the generated feature maps using at least one convolutional neural network;
detecting one or more objects in the multiple captured images;
mapping one or more objects detected around the model of the vehicle, to the created surround view image using the calculated pose and depth estimate; and
constructing the three-dimensional reconstruction of the environment, using the surround view image and the mapped objects.

2. The method as claimed in claim 1, wherein capturing the multiple wide-angle images further comprises
capturing at least two wide-angle images having overlapping field of view, from the multiple fisheye lens cameras;
calculating a disparity between the captured at least two wide angle images; and
detecting coordinates of an object on the at least two or more captured wide-angle images, and a dimension of the object on the image using the calculated disparity.

3. The method as claimed in claims 1 and 2, wherein capturing multiple wide-angle images further comprises,
undistorting the captured images and correcting geometric alignment in the undistorted images;
generating a point cloud by proving the calculated difference between the captured at least two wide-angle images as input to the convolutional neural network; and
performing simultaneous localization of the objects on the captured at least two wide-angle images image using the generated point cloud and estimating motion of the object.

4. The method as claimed in claims 1 - 3, wherein the method steps are performed more than once and wherein generating the feature map and calculating the pose and depth estimate comprises processing each of the captured wide-angle images by a feature extraction network, and calculating an incremental pose update for each of the captured wide-angle image.

5. The method as claimed in claims 1-4, wherein a model of the vehicle is placed at the center of the created surround view image.

6. The method as claimed in claims 1-4, comprising continuously performing the method as claimed above until a driving control unit in the vehicle is turned off.

7. A device for generating a three-dimensional reconstruction of an environment around a vehicle comprising
a memory;
multiple fisheye lens cameras mounted over the vehicle;
one or more image processors coupled to the multiple fish eye lens cameras;
one or more graphical processing unit coupled to the multiple fish eye lens cameras;
one or more processing unit for performing the method as claimed in claims 1-6.

8. A non-transitory computer-readable storage medium comprising instructions, which when executed by a processor, performs the method of any one of claims 1 to 5.
